# EUROPEAN PATENT APPLICATION

(11) **EP 4 610 780 A1**
(43) Date of publication of application: **03.09.2025**
(21) Application number: 25157804.3
(22) Date of filing: 13.02.2025
(51) Int. Cl.: G06F 1/3234, G06F 1/3209, G06F 1/3215, G06F 1/3228, G06F 1/3231, G06F 1/3287, G06F 3/0482, G06F 3/04842, G06F 3/12, B41J 2/045, G03G 15/00

(54) **INFORMATION PROCESSING APPARATUS, CONTROL METHOD FOR INFORMATION PROCESSING APPARATUS, COMPUTER PROGRAM, AND STORAGE MEDIUM**

(30) Priority: 01.03.2024 JP 2024031147
(71) Applicant: CANON KABUSHIKI KAISHA, Tokyo 146-8501 (JP)
(72) Inventor: HIKICHI, Atsushi, 146-8501 Tokyo (JP)
(74) Representative: Canon Europe Limited

(57) **Abstract**

To provide an information processing apparatus capable of reducing power consumption in accordance with a use state. An information processing apparatus (an image forming apparatus 101) includes a power control unit (CPU 340) capable of performing switching control between a first power state and a second power state, and a determination unit (CPU 340) for determining whether a current state is a connected state in which a network is connected or a disconnected state in which the network is disconnected. The determination unit determines whether the network is in the connected state or the disconnected state after switching from the first power state to the second power state is completed. The power control unit enables a shutoff control to forcibly shut off the power supply when it is determined as the disconnected state.

## Description

### CROSS REFERENCE TO RELATED APPLICATION

This application claims priority from Japanese Patent Application No. 2024-031147, filed on March 1, 2024.

### FIELD OF THE DISCLOSURE

The present disclosure relates to an information processing apparatus, a control method for the information processing apparatus, a computer program, and a storage medium.

### BACKGROUND OF THE DISCLOSURE

There is an image forming apparatus capable of waiting in a plurality of standby states. The standby states include, for example, a ready state, a sleep state, and a power-off state. The ready state is a state of waiting for an input of an instruction about a copy function, a print function, or the like, while raising temperature inside the image forming apparatus. The sleep state is a state in which a user does not use the image forming apparatus and stands by while reducing power consumption (standby power). The power-off state is a state in which the image forming apparatus cannot be used immediately and the power consumption is the lowest.

The image forming apparatus also has a power saving function for transitioning from each standby state to a state with lower power consumption. This power saving function enables operations of respective units constituting the image forming apparatus while waiting with low power consumption. For example, an apparatus that displays a predetermined message when there is no operation in a predetermined automatic stop period and turns off the power of the apparatus (automatic shutdown) when no operation is received is disclosed in Japanese Patent Laid-Open Publication No. 2015-133636. The apparatus disclosed in the above publication can reduce power consumption by the automatic shutdown. The apparatus disclosed in the above publication can change (manage) the time of the automatic shutdown by recording information about the automatic shutdown.

In using a known image forming apparatus that is not connected to a network and is not being operated remotely from the outside, it may be settled that the image forming apparatus is not used until a user approaches the image forming apparatus. In this image forming apparatus, the power supply is continued in the ON state although it is settled that the image forming apparatus is not used, and power consumption is wasted by that amount.

### SUMMARY OF THE DISCLOSURE

The present disclosure provides an information processing apparatus, a control method therefor, and a storage medium storing a control program therefor, which are capable of reducing power consumption in the information processing apparatus in accordance with a use state of the information processing apparatus.

According to a first aspect of the present disclosure, there are provided information processing apparatuses as specified in claims 1 and 8. Preferable features of the first aspect of the present disclosure are specified in claims 2 to 7 and 9 to 12. These preferable features of the first aspect are also preferable features of the other aspects of the present disclosure.

According to a second aspect of the present disclosure, there are provided control methods for an information processing apparatus as specified in claims 13 and 14.

According to a third aspect of the present disclosure, there is provided a computer program as specified in claim 15.

According to a fourth aspect of the present disclosure, there is provided a storage medium as specified in claim 16.

Further features of the present disclosure will become apparent from the following description of embodiments with reference to the attached drawings.

### BRIEF DESCRIPTION OF THE DRAWINGS

FIG. 1 is a block diagram illustrating an example of a hardware configuration of an image forming system having an image forming apparatus to which an information processing apparatus according to a first embodiment is applied.
FIG. 2 is a block diagram illustrating an example of a hardware configuration of a controller of the image forming apparatus.
FIG. 3 is a block diagram illustrating an example of a configuration for power control of the image forming apparatus.
FIG. 4 is a view illustrating an example of a UI screen displayed on an operation unit included in the image forming apparatus.
FIG. 5 is a flowchart illustrating an automatic turn-off process performed in the image forming apparatus.
FIG. 6 is a flowchart illustrating an automatic turn-off process performed in an image forming apparatus according to a second embodiment.
FIG. 7 is a flowchart illustrating an automatic turn-off process executed in an image forming apparatus according to a third embodiment.

### DETAILED DESCRIPTION OF THE PREFERRED EMBODIMENTS

Hereafter, embodiments according to the present disclosure will be described in detail by referring to the drawings. However, configurations described in the following embodiments are merely examples, and the scope of the present disclosure is not limited by the configurations described in the embodiments. For example, each unit constituting the present disclosure can be replaced with any configuration capable of exhibiting the same function. In addition, an arbitrary constituent may be added. In addition, two or more arbitrary configurations (features) of the embodiments may be combined.

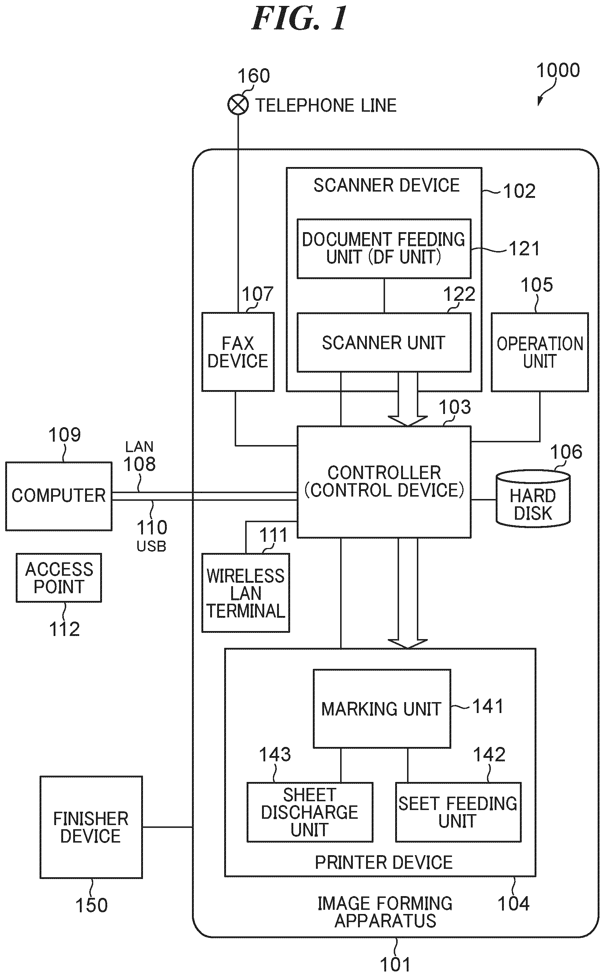

The first embodiment will now be described with reference to FIGS. 1 to 5.

FIG. 1 is a block diagram illustrating an example of a hardware configuration of an image forming system having an image forming apparatus to which an information processing apparatus according to the first embodiment is applied. As illustrated in FIG. 1, the image forming system 1000 includes the image forming apparatus 101, a computer 109, an access point 112, and a finisher device 150.

In the present embodiment, the image forming apparatus 101 is an MFP (a Multi-Function Peripheral) having a print function, a scan function, and a data communication function, but is not limited thereto. The image forming apparatus 101 is configured to take a first power state in which electric power is supplied and a second power state in which power consumption is lower than that in the first power state. Power states of the image forming apparatus 101 include, for example, a normal state, a ready state, a sleep state, a power-off state, and a shutdown state.

The normal state is a state in which a desired function, such as the print function, the scanner function, or the data communication function, can be executed quickly. The ready state is a state of waiting for an input of an instruction about the copy function, the print function, or the like, while raising temperature inside the image forming apparatus 101. The sleep state is a state in which a user does not use the image forming apparatus 101 and stands by while reducing power consumption (standby power). The power-off state is a state in which the image forming apparatus 101 cannot be used immediately but power consumption is the lowest compared to the ready state and the sleep state.

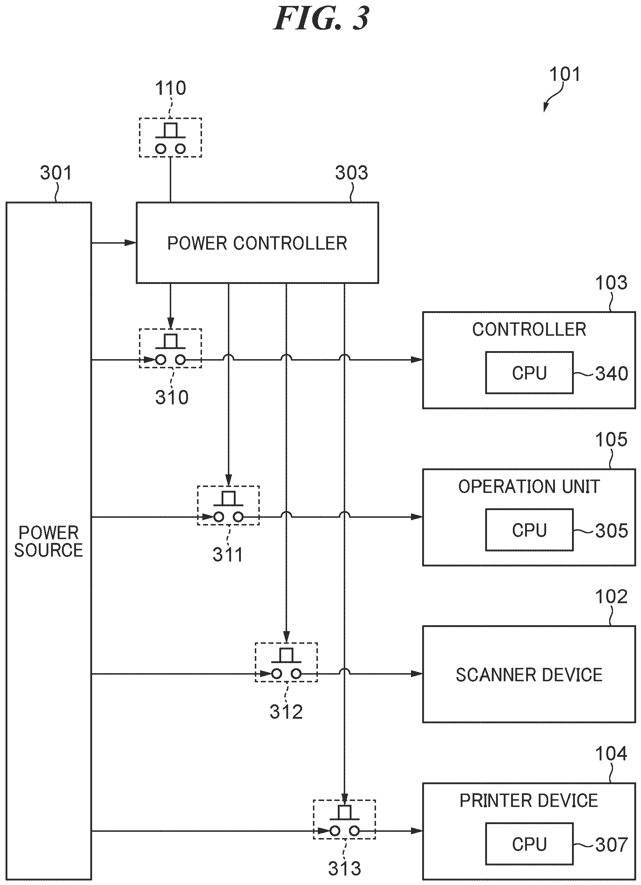

The shutdown state is a state in which a power source 301 (see FIG. 3) of the image forming apparatus 101 turns off, i.e., the electric power from the power source 301 is interrupted. In this embodiment, for example, the first power state is the normal state, and the second power state is the sleep state, but this is not limiting. In this embodiment, a CPU 340 (described later) performs a switching control (a power control step) for switching the power state of the image forming apparatus 101 between the first power state and the second power state.

The image forming apparatus 101 includes a scanner device 102, a controller (control device) 103, a printer device 104, an operation unit (display unit) 105, a hard disk (HDD) 106, a FAX device 107, and a wireless LAN terminal 111. The scanner device 102 optically reads an image from a document and converts the image into a digital image.

In this embodiment, the scanner device 102 includes a document feeding unit (DF unit) 121 and a scanner unit 122. The document feeding unit 121 can automatically and sequentially feed sheets from a bundle of documents. The scanner unit 122 optically scans a document and generates a digital image (image data) of the document. This image data is transmitted to the controller 103. The printer device 104 prints the image data on a sheet. In this embodiment, the printer device 104 includes a marking unit 141, a sheet feeding unit 142, and a sheet discharge unit 143. The sheet feeding unit 142 sequentially supplies sheets one by one from a bundle of sheets to the marking unit 141. The marking unit 141 prints image data on a sheet supplied from the sheet feeding unit 142. The sheet discharge unit 143 discharges the printed matter on which the image data is printed.

The operation unit 105 includes a touch panel and hard keys for accepting a setting for the image forming apparatus 101 from a user and displaying a processing state in the image forming apparatus 101. The operation unit 105 can be provided with setting switches for enabling or disabling functions, such as suspension (standby), hibernation, and hybrid sleep, as members of accepting settings for the image forming apparatus 101 from the user. The operation unit 105 can refer to a set flag from an application. The hard disk 106 is a nonvolatile storage device, such as an SSD or an eMMC, that stores, for example, image data and control programs.

The control programs include, for example, a program to cause the controller 103 (computer) to function as units or means of the image forming apparatus 101 (a control method for an information processing apparatus). The FAX device 107 can transmit and receive various kinds of information through the telephone line 160. The controller 103 is a computer that is communicably connected to the scanner device 102, the printer device 104, the operation unit 105, the hard disk 106, and the FAX device 107 and controls operations of these devices. The controller 103 can execute various jobs such as a print job by controlling the operations of these devices.

Examples of jobs (functions) that can be executed by the image forming apparatus 101 include a copy function, an image transmission function, an image storage function, and an image printing function. The copy function is a function of recording the image data read by the scanner device 102 in the hard disk 106 and printing the image data by the printer device 104. The image transmission function is a function of transmitting the image data read by the scanner 102 to the computer 109 via the LAN 108. The image storage function is a function of recording the image data read by the scanner device 102 in the hard disk 106 and transmitting and printing the image data, as necessary. The image printing function is a function of analyzing language data (for example, a page description language data) transmitted from the computer 109 and printing the language data by the printer device 104.

The image forming apparatus 101 is communicably connected to the computer 109 via the LAN 108. Thus, the image forming apparatus 101 can receive an execution instruction for instructing the image forming apparatus 101 to execute a predetermined process from the computer 109. That is, the image forming apparatus 101 can receive various jobs from the computer 109 and exchange image data with the computer 109. Although only one computer is connected to the image forming apparatus 101 in the configuration shown in FIG. 1, this is not limiting. Two or more computers may be connected.

The image forming apparatus 101 and the computer 109 may also be communicably connected via a USB 110. The image forming apparatus 101 in this case functions as a USB device. The image forming apparatus 101 and the computer 109 can be communicably connected to each other via the access point 112 and the wireless LAN terminal 111. The finisher device 150 performs various processes, such as a sorting process, a stapling process, a punch hole forming process, and a cutting process, on a printed matter output from the sheet discharge unit 143 of the printer device 104 of the image forming apparatus 101.

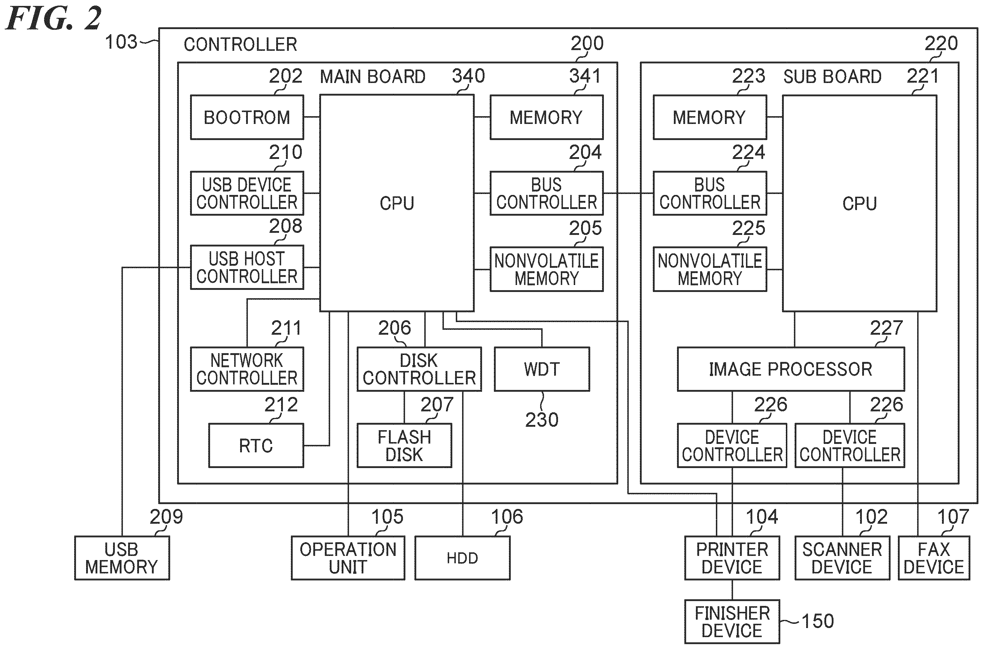

FIG. 2 is a block diagram illustrating an example of a hardware configuration of the controller 103 of the image forming apparatus 101. As shown in FIG. 2, the controller 103 includes a main board 200 and a sub board 220. The main board 200 is a general-purpose CPU system, and includes a boot ROM 202, a bus controller 204, a nonvolatile memory 205, a disk controller 206, and a flash disk 207.

The main board 200 also includes a USB host controller 208, a USB device controller 210, a network controller 211, an RTC 212, a watchdog timer (WDT) 230, a CPU 340, and a memory 341. These modules included in the main board 200 are communicably connected to each other.

The boot ROM 202 stores a boot program. The bus controller 204 has a bridge function with an external bus. The nonvolatile memory 205 is a memory in which data is not erased even when the power supply is shut off. The disk controller 206 controls a storage device. The flash disk 207 is a relatively small-capacity storage device constituted by a semiconductor device, and is an SSD or an eMMC, for example.

The USB host controller 208 has a function of controlling a USB host. Although the USB host is the computer 109 or a USB memory 209 connectable through the USB 110 in this embodiment, this is not limiting. For example, the USB host may be a USB device configured to be connectable by a USB like a USB cable. The USB device controller 210 causes the image forming apparatus 101 to function as a USB device.

The network controller 211 exchanges data with the computer 109 via the access point 112. The network controller 211 and the wireless LAN terminal 111 represent the same functional module. The network controller 211 may be connected to the CPU 340 via an IO bus or may be connected to the USB host controller 208 via the USB. Further, the network controller 211 is connected to a wired/wireless network via the IO bus, and is connected to a USB wired/wireless network via the USB host controller 208. The RTC 212 sets a current time and a return time. The watchdog timer 230 is used to reset the controller 103.

The CPU 340 controls the entire main board 200 including the modules such as the boot ROM 202. Note that the CPU 340 includes a large number of hardware components such as a chip set, a bus bridge, and a clock generator. The memory 341 is used as a work memory of the CPU 340. The USB memory 209, the operation unit 105, and the hard disk 106 are communicably connected to the main board 200.

The sub board 220 is constituted by a relatively small general-purpose CPU system and image processing hardware. The sub board 220 includes a CPU 221, a memory 223, a bus controller 224, a nonvolatile memory 225, two device controllers 226, and an image processor 227, which are communicably connected to each other.

The CPU 221 controls the entire sub board 220 including the modules such as the memory 223, and also controls the FAX device 107. As with the CPU 221, the CPU 340 includes a large number of hardware components such as a chip set, a bus bridge, and a clock generator.

The memory 223 is used as a work memory of the CPU 221. The bus controller 224 has a bridge function with an external bus. The nonvolatile memory 225 is a memory in which data is not erased even when the power supply is shut off. In this embodiment, the two device controllers 226 are provided. The scanner device 102 is communicably connected to one of the two device controllers 226. This enables the scanner device 102 to transmit image data to the sub board 220. The printer device 104 is communicably connected to the other device controller 226. This enables transmission of image data from the sub board 220 to the printer device 104. The image processor 227 performs a digital image process in real time.

Here, the operation of the controller 103 will be described by taking image copying (a copy function) as an example. When the image copying is instructed from the operation unit 105, the CPU 340 transmits an image reading instruction to the scanner device 102 via the CPU 221. The scanner device 102 optically scans a document and generates image data of the document. The scanner device 102 inputs the image data into the image processor 227 via the device controller 226. The image processor 227 performs DMA (Direct Memory Access) transfer to the memory 223 via the CPU 221, and temporarily stores the image data. When determining that a predetermined amount or all of the image data is stored in the memory 223, the CPU 340 transmits an image output instruction to the printer device 104 via the CPU 221.

The CPU 221 also transmits an address of the image data in the memory 223 to the image processor 227. The image data on the memory 223 is transmitted to the printer device 104 via the image processor 227 and the device controller 226 in accordance with a synchronization signal from the printer device 104. The printer device 104 prints the image data on a sheet. When printing a plurality of copies, the CPU 340 stores the image data stored in the memory 223 into the hard disk 106. For the second and subsequent copies, even if the transmission of the image data from the scanner device 102 is omitted, the image data can be transmitted from the hard disk 106 or the memory 223 to the printer device 104.

FIG. 3 is a block diagram illustrating an example of a configuration for power control of the image forming apparatus. As illustrated in FIG. 3, the image forming apparatus 101 includes, as a power control configuration, a power source 301, a power controller 303, a first power switch 310, a second power switch 311, a third power switch 312, a fourth power switch 313, and a main power switch 110. The power controller 303 is connected to the power source 301, the first power switch 310 to the fourth power switch 313, and the main power switch 110. As described above, the image forming apparatus 101 includes the scanner device 102, the controller 103, the printer device 104, and the operation unit 105.

The scanner device 102 is connected to the power source 301 and the power controller 303 via the third power switch 312. The controller 103 is connected to the power source 301 and the power source controller 303 via the first power switch 310. The printer device 104 is connected to the power source 301 and the power controller 303 via the fourth power switch 313. The operation unit 105 is connected to the power source 301 and the power controller 303 via the second power switch 311. The controller 103 includes the CPU 340. The printer device 104 has a built-in CPU 307. The operation unit 105 has a built-in CPU 305.

The power source 301 usually supplies the electric power to the power controller 303 via a power supply line. When the power is off, only the power controller 303 is energized and power control is performed. This can minimize the power consumption. When the main power switch 110 of the image forming apparatus 101 is operated, that is, pressed, the power controller 303 detects the operation. Then, the power controller 303 controls the first power switch 310 to supply the electric power from the power source 301 to the CPU 340 of the controller 103. Similarly, the power controller 303 controls the second power switch 311 to supply the electric power to the CPU 305 of the operation unit 105, controls the third power switch 312 to supply the electric power to the scanner device 102, and controls the fourth power switch 313 to supply the electric power to the CPU 307 of the printer device 104.

The CPU 340 of the controller 103 can control the second power switch 311 to individually supply the electric power to the CPU 305 of the operation unit 105 by notifying the power controller 303. Similarly, the CPU 340 can control the third power switch 312 to individually supply the electric power to the scanner device 102 or control the fourth power switch 313 to individually supply the electric power to the printer device 104 by notifying the power controller 303. The power controller 303 or the CPU 340 can also control the power supplied to the marking unit 141, the sheet feeding unit 142, and the sheet discharge unit 143 of the printer device 104.

The power supply control for respective blocks can also be achieved by, for example, constituting the first power switch 310 from two systems. In the sleep state, only a relay switch of one system connected to a block to shut off is turned OFF and a relay switch of the other system is kept ON. In the shutdown state, the relay switches of both systems are turned OFF. A power supply control signal in this case is not a binary signal but a multi-value control signal corresponding to the power state. In the power states, such as the sleep state and the shutdown state, the power supply is performed by such a control. In this control, the power controller 303 may perform a multi-value control on the first power switch 310 to supply the electric power to the blocks connected to the controller 103. In this control, the CPU 340 of the controller 103 may perform a multi-value control of the first power switch 310 by notifying the power controller 303 to supply the electric power to the blocks connected to the controller 103.

A reboot process in the image forming apparatus 101 (power supply in rebooting the power controller) will be described. The CPU 340 of the controller 103 receives a reboot event in the standby state after the image forming apparatus 101 is activated. The reboot event is issued from an application running on the CPU 340 or issued from the computer 109 via the LAN 108, for example. After receiving the reboot event, the CPU 340 performs a process to end the application and a process to store the information stored in the memory 341 into the hard disk 106.

The CPU 340 performs termination processes on the scanner device 102, the printer device 104, the FAX device 107, the finisher device 150, and a peripheral device. After the completion of the processes, the CPU 340 notifies the power controller 303 of the completion and transitions to the power-off state. In the power-off state, the power controller 303 turns off the first power switch 310 to the fourth power switch 313. As a result, the power supply to the controller 103, the printer device 104, the scanner device 102, the FAX device 107, and the finisher device 150 is cut off. The power controller 303 preferably waits until the analog signal of the power source 301 completely drops off. Further, the image forming apparatus 101 may shorten the signal waiting time by transition to a reset state instead of the power-off state.

Then, after the transition to the power-off state, the power controller 303 turns ON the first power switch 310 to the fourth power switch 313. Thus, the controller 103, the printer device 104, the scanner device 102, the FAX device 107, and the finisher device 150 are energized. The CPU 340 performs an initialization process of the peripheral device and performs activation processes of the scanner device 102, the printer device 104, the FAX device 107, the finisher device 150, the peripheral device.

A sleep transition process in the image forming apparatus 101 (controller 103) will be described. The sleep transition process is a process in which the image forming apparatus 101 transitions to the sleep state when it is determined that the active state in which the image forming apparatus 101 is not used continues for a predetermined period by using an automatic sleep timer. The CPU 340 of the controller 103 notifies the power controller 303 of the transition to the sleep state. This notification changes the power supply to the controller 103. As described above, the power supply control for respective blocks can also be achieved by, for example, constituting the first power switch 310 from two systems. **In** the sleep state, only a relay switch of one system connected to a block to shut off is turned OFF and a relay switch of the other system is kept ON. At this time, the CPU 340 can also transition to the sleep state by notifying the power controller 303 to turn off the second power switch 311 and stopping the power supply from the power source 301 to the operation unit 105 by the power controller 303.

The CPU 340 can also transition to the sleep state by the CPU 305 of the operation unit 105 performing notification to set the operation panel and the peripheral device to the power saving state by serial communications. Similarly, the scanner device 102 and the printer device 104 can also transition to the sleep state.

The sleep state of the image forming apparatus 101 will be described. The sleep state is a state in which an activation time can be shortened than that of a normal activation while reducing the power consumption.

For example, the image forming apparatus 101 enters into the sleep state when a predetermined time elapses in a state where the image forming apparatus 101 is not used (i.e., when the user does not operate the image forming apparatus 101), when the touch panel or a power saving key on the operation unit 105 is pressed, or when a preset time is reached. In the sleep state, for example, the electric power is supplied to the memory 341, an interruption controller (not illustrated), the USB host controller 208, the USB device controller 210, the network controller 211, and the RTC 212 of the controller 103. The electric power is also supplied to the power saving key of the operation unit 105, a part of the FAX device 107, and various sensors.

First, the power supply in returning from the sleep state in the image forming apparatus 101 will be described. A return factor from the sleep state depends on the system configuration of the image forming system 100. The following description is an example. The power controller 303 starts power supply in response to one or more interruptions from, for example, the network, the RTC 212 that detects a timer and an alarm, and the FAX device 107 that detects an incoming call or off-hook during the sleep state. Other interruptions occur from a soft switch, various sensors, and a USB that detects communication.

Specific examples of other interruptions include opening and closing of a cover of a front door of the printer device 104, insertion and removal of a print sheet of a multi manual sheet feeding unit of the printer device 104, opening and closing of a pressure plate of the scanner device 102, and detection of a document by an automatic document feeder of the scanner device 102. Further, other interruptions include card detection of an NFC card reader, detection of a human sensor, off-hook of a FAX handset, and FAX reception.

The power controller 303 notifies the CPU 340 of an interruption cause. When receiving a notification from the power controller 303, the CPU 340 performs a process for returning the state of the software to the normal state, that is, a sleep return process for returning from the sleep state.

Next, the sleep return process in the image forming apparatus 101 will be described. The power controller 303 receives an event handler of pressing the power saving key, which is one of the sleep return factors, during the sleep state. Accordingly, the power controller 303 turns ON the first power switch 310 to return the CPU 340 from the sleep state. At this time, for example, the power controller 303 performs the multi-value control of the first power switch 310 to supply the electric power to the respective blocks of the controller 103. The power controller 303 can also cause the CPU 340 to return from the sleep state by issuing an interruption signal to the CPU 340. The CPU 340 notifies the power controller 303 to turn on the second power switch 311 to the fourth power switch 313. Thus, the electric power is supplied to the scanner device 102, the printer device 104, and the operation unit 105. Although the power supply to the FAX device 107 or the like is not illustrated, it can be prepared as a signal (not illustrated).

Although the sleep return factor in the above description is the pressing of the power saving key, it may be a network packet. In this case, when receiving the network packet during the sleep state, the power controller 303 turns ON the first power switch 310 to return the CPU 340 from the sleep state. When the power controller 303 interprets the network packet and determines that the packet is a print job, the CPU 340 notifies the power controller 303 to turn ON the fourth power switch 313. This supplies the electric power to the printer device 104. In this case, the process can be performed without supplying the electric power to the operation unit 105 and the scanner device 102. That is, when the user does not use the touch panel, the power supply to the operation unit 105 is unnecessary. When no print job is generated or when it is unnecessary to obtain device information, the electric power may not be supplied to the printer device 104 and the scanner device 102.

The CPU 340 transitions to the sleep state again when, for example, the copy or the print job via the network is completed. At this time, the CPU 340 notifies the power controller 303 of the transition to the sleep state. The power controller 303 turns OFF the second power switch 311 to the fourth power switch 313 to stop the power supply to the components other than the controller 103. At this time, for example, the power controller 303 can set the CPU 340 to an interruption signal waiting state, perform the multi-value control of the first power switch 310 to turn OFF the blocks of the controller 103, and then set the CPU 340 to the sleep state.

When the main power switch 110 is turned OFF, the power controller 303 notifies the CPU 340 of the turn-off. The power controller 303 performs the multi-value control of the first power switch 310 to turn off the powers of the CPU 221 of the sub board 220 and the memory 223. The power controller 303 sets the memory 341 of the main board 200 to a self-refresh state in which a refresh rate is lowered to save power. Thus, the controller 103 can be brought into a suspended state. The suspended state is a power saving state in which the memory is energized to hold the state, and can be used in the sleep state and a high-speed activation mode.

When the main power switch 110 is turned ON, the power controller 303 releases the memory 341 of the main board 200 from the self-refresh state, and turns ON the power of the CPU 221 and the memory 223 of the sub board 220 to activate them. Thus, the controller 303 can be returned from the suspended state. The trigger to transition to the suspended state or return from the suspended state is not limited to the ON/OFF operation of the main power switch 110, and may be, for example, a software event.

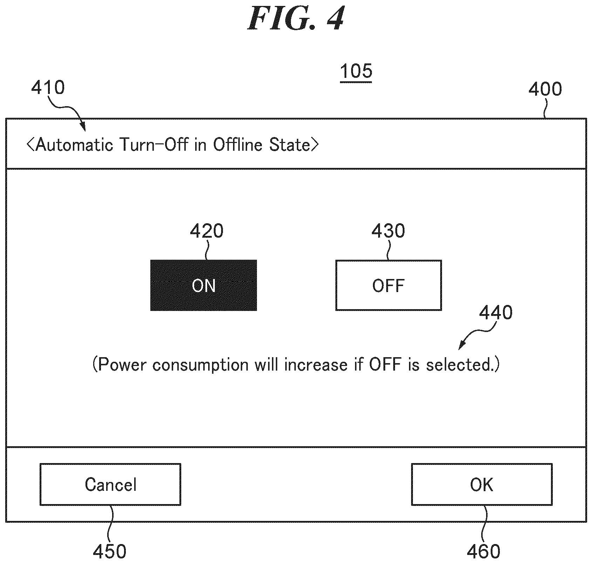

FIG. 4 is a view illustrating an example of a UI screen displayed on the operation unit of the image forming apparatus. The UI screen (an operation screen) 400 shown in FIG. 4 is displayed on the operation unit 105 of the image forming apparatus 101. The UI screen 400 is displayed in response to a notification from the CPU 340 of the controller 103 to the CPU 305 of the operation unit 105. The UI screen 400 includes a label field 410, an ON key 420, an OFF key 430, a user notification field 440, a cancel key 450, and an OK key 460. In the label field 410, a function such as an automatic turn-off in an offline state is displayed.

Hereinafter, the offline state and the automatic turn-off will be described. As described above, the image forming apparatus 101 is configured to be connectable with of the networks, such as the wired LAN, the wireless LAN, the USB host (USB device), and the FAX device 107. Then, when the image forming apparatus 101 is communicably connected to at least one of the wired LAN, the wireless LAN, the USB host (USB device), and the FAX device 107, it is determined that the image forming apparatus 101 is in a connected state in which the image forming apparatus 101 is connected to the network. This connected state may be referred to as online (an online state).

In contrast, when the image forming apparatus 101 is not communicably connected to any of the wired LAN, the wireless LAN, the USB host (USB device), and the FAX device 107, it is determined that the image forming apparatus 101 is in a disconnected state in which the image forming apparatus 101 is not connected to the network. The disconnected state may be referred to as the offline (offline state). In this way, the image forming apparatus 101 determines whether it is in the online, that is, in the connected state or in the offline, that is, in the disconnected state (a determination step). The CPU 340 of the main board 200 is responsible for this determination.

Although the CPU 340 functions as a determination unit that determines whether the apparatus is in the connected state or the disconnected state in this embodiment, this is not limiting. For example, a part functioning as the determination unit may be provided separately from the CPU 340. Further, as a result of the determination by the CPU 340, when it is determined that the apparatus is in the disconnected state, it is possible to perform a shutoff control for forcibly shutting off the power source of the image forming apparatus 101. The shutoff control may be referred to as the automatic turn-off or the shutdown. The CPU 340 of the main board 200 is responsible for the shutoff control. Although the CPU 340 functions as a power control unit that performs the shutoff control in this embodiment, this is not limiting. For example, a part functioning as the power control unit may be provided separately from the CPU 340.

The ON key 420 validates the function displayed in the label field 410. The OFF key 430 invalidates the function displayed in the label field 410. In this way, the ON key 420 and the OFF key 430 function as an operation unit that allows an operation for selecting whether the function displayed in the label field 410 is valid or invalid, and a switching control unit that performs a switching control for switching between the valid and invalid states of the function.

In the user notification field 440, for example, a warning "Power consumption will increase if OFF is selected." is displayed. The user notification field 440 may display, for example, numerical values from "1" to "10" to be selectable. In this case, a message such as "Power consumption increases as the value increases" or "Power consumption increases as the value decreases" may be displayed in the user notification field 440. Further, when the numerical values include "0", a message of "Power consumption increases when the value is "0" or as the value increases." may be displayed. Further, when one choice is selected, sub-choices belonging to the selected choice may be displayed. A warning may then be displayed when the sub-choices are displayed.

The cancel key 450 is used to cancel the setting state on the UI screen 400. The OK key 460 is used to fix the setting state on the UI screen 400. The CPU 340 can save the setting state on the UI screen 400 in the storage device (a memory unit), such as the HDD 106, the nonvolatile memory 205, or the flash disk 207. The CPU 340 can change the setting state on the UI screen 400 in response to an operation by a user or an administrator or a notification from the computer 109 via the LAN 108.

In using an image forming apparatus that is not connected to a network and is not being operated remotely from the outside, it may be settled that the image forming apparatus is not used until a user approaches the image forming apparatus. In this image forming apparatus, since a power source is kept ON even though it is settled that the image forming apparatus is not used, power consumption is wasted accordingly. In view of this issue, the image forming apparatus 101 in this embodiment is configured to be able to reduce such waste of power consumption. The configuration and operation will be described below.

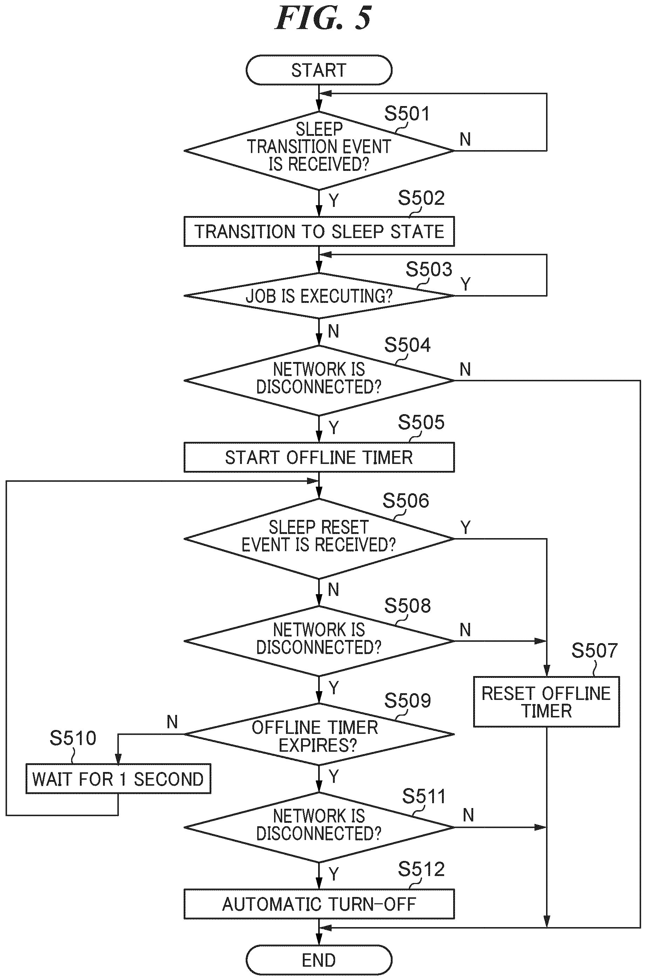

FIG. 5 is a flowchart illustrating the automatic turn-off process executed in the image forming apparatus 101. The program based on the flowchart illustrated in FIG. 5 is started from the standby state in which the CPU 340 of the main board 200 can receive a print job or a sleep transition event that is a trigger of transition to the sleep state. The CPU 305 of the operation unit 105 starts a sleep transition timer when a user last operates the image forming apparatus 101. Then, when the operation unit 105 receives no operation from a user during a predetermined period from the start of the sleep transition timer, the CPU 305 issues the sleep transition event to the CPU 340. Further, when a power saving key of the operation unit 105 is operated, the CPU 305 issues the sleep transition event to the CPU 340. Further, when a sleep event or a job event is received from the computer 109 via the LAN 108, the sleep transition event is issued to the CPU 340.

As shown in FIG. 5, in a step S501, the CPU 340 confirms that the use of the image forming apparatus 101 is completed, and determines whether the sleep transition event that is a trigger of transition from the normal state to the sleep state is received. The sleep transition event corresponds to, for example, an operation of an automatic sleep key or the power saving key. As a result of the determination in the step S501, when it is determined that the sleep transition event is received, the process proceeds to a step S502. On the other hand, as a result of the determination in the step S501, when it is determined that no sleep transition event is received, the process waits in the step S501.

The CPU 340 starts transition to the sleep state in the step S502 and proceeds with the process to a step S503.

In the step S503, the CPU 340 determines whether a predetermined process (for example, a copy job) based on an execution instruction from the computer 109 is executing. As a result of the determination in the step S503, when it is determined that the job is executing, the process waits in the step S503. Thus, the CPU 340 is in the standby state until the job execution is completed. When receiving a sleep reset event as an event other than a job, the CPU 340 can transition to a state of canceling the state waiting for completion of the job execution. On the other hand, as a result of the determination in the step S503, when it is determined that the job is not executing, the process proceeds to a step S504.

In the step S504, the CPU 340 determines whether the network is in the disconnected state. As a result of the determination in the step S504, when it is determined that the network is in the disconnected state, the process proceeds to a step S505. On the other hand, as a result of the determination in the step S504, when it is determined that the network is not in the disconnected state, that is, the network is in the connected state, the process ends. Thus, the transition to the sleep state is completed.

In the step S505, the CPU 340 starts the operation of an offline timer (a timer) and proceeds with the process to a step S506. The offline timer is built in the main board 200, for example.

In the step S506, the CPU 340 determines whether the sleep reset event for returning from the sleep state is received. The sleep reset event corresponds to, for example, a print job, sensor recovery, an operation of the power saving key, etc. As a result of the determination in the step S506, when it is determined that the sleep reset event is received, the process proceeds to a step S507. On the other hand, as a result of the determination in the step S506, when it is determined that no sleep reset event is received, the process proceeds to a step S508.

The CPU 340 resets the offline timer, i.e., returns the operation of the offline timer to an initial state in the step S507 and ends the process.

In the step S508, the CPU 340 determines whether the network is in the disconnected state. As a result of the determination in the step S508, when it is determined that the network is in the disconnected state, the process proceeds to a step S509. On the other hand, as a result of the determination in the step S508, when it is determined that the network is not in the disconnected state, the process proceeds to the step S507.

In the step S509, the CPU 340 determines whether the offline timer expires, i.e., whether the offline timer expires. As a result of the determination in the step S509, when it is determined that the operation of the offline timer expires, the process proceeds to a step S511. On the other hand, as a result of the determination in the step S509, when it is determined that the operation of the offline timer is not expired, the process proceeds to a step S510.

The CPU 340 waits for a certain time (e.g., 1 second) in the step S510 and sequentially executes the steps from the step S506.

In the step S511, the CPU 340 determines whether network is in the disconnected state. As a result of the determination in the step S511, when it is determined that the network is in the disconnected state, the process proceeds to a step S512. On the other hand, as a result of the determination in the step S511, when it is determined that the network is not in the disconnected state, the process ends.

In the step S512, the CPU 340 performs the automatic turn-off.

As described above, in the image forming apparatus 101, it is determined whether the network is in the disconnected state in the step S504 after the job execution is completed (No in the step S503) during the transition to the sleep state (the step S502). Note that this determination is not necessarily performed during the transition to the sleep state, and may be performed after the transition to the sleep state is completed. When it is determined that the network is in the disconnected state (Yes in the step S504), the offline timer is started. When the offline timer expires (Yes in the step S509), it is determined again whether the network is in the disconnected state (the step S511). When it is determined that the network is in the disconnected state again (Yes in the step S511), the automatic turn-off is performed (the step S512).

When it is determined that the network is in the connected state in any of the determinations of whether the network is in the disconnected state (No in the step S504 or S511), the automatic turn-off is not performed.

As described above, when the image forming apparatus 101 is not connected to the network and is not operated remotely from the outside, it may be settled that the image forming apparatus is not used until a user approaches the image forming apparatus 101. In such a use state, the automatic turn-off process can prevent the power source 301 of the image forming apparatus 101 from being kept ON. This can reduce waste of the power consumption in the image forming apparatus 101. When it is determined that the network is not in the disconnected state, that is, the network is in the connected state (No in the step S508) before the offline timer expires (No in the step S509), the offline timer is reset (the step S507). This can reduce an unnecessary operation of the offline timer, that is, countdown. When the transition from the sleep state to the normal state is completed before the offline timer expires, the offline timer may be reset. Instead of resetting the offline timer, for example, the operation of the offline timer may be canceled or stopped.

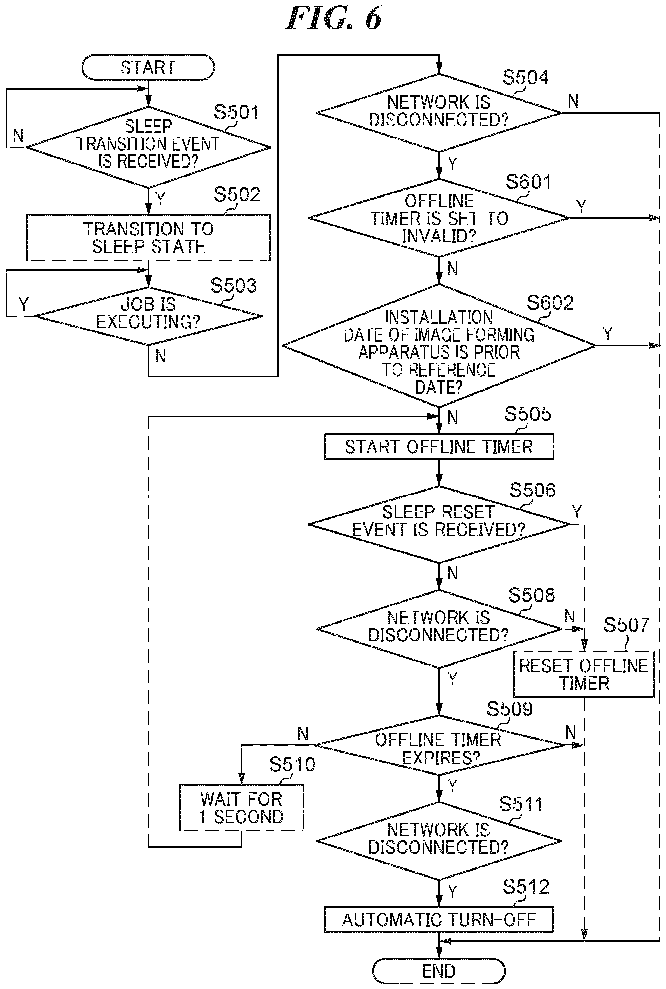

Hereinafter, a second embodiment will be described with reference to FIG. 6. Differences from the above-described embodiment will be described, and the description of the same matters will be omitted. The image forming apparatus 101 may be installed in a library, for example. In this case, when the image forming apparatus 101 is in a network disconnected state, the automatic turn-off that is unexpected by a user of the image forming apparatus 101 in the library may be performed. Further, unexpected automatic turn-off may be performed after firmware of the image forming apparatus 101 that is already in operation is updated. Therefore, the image forming apparatus 101 in this embodiment is configured to be able to reduce this phenomenon. The configuration and operation will be described below.

When the offline timer is always enabled, the issue in that the image forming apparatus 101 suddenly performs the automatic turn-off arises in an environment in which the image forming apparatus 101 is used in a library or the like by unspecified number of people in the network disconnected state. Therefore, when the automatic turn-off in the environment in which the network is in the disconnected state becomes a trouble, the CPU 340 can set the offline timer to be disabled from a local UI or a remote UI. This can prevent sudden automatic turn-off of the image forming apparatus 101.

In addition, when the offline timer is always enabled, the issue in that the image forming apparatus 101 suddenly performs the automatic turn-off arises in a case where firmware of the image forming apparatus 101 used in a city like a library in the network disconnected state is upgraded (updated). Therefore, the CPU 340 stores information about an installation date on which the image forming apparatus 101 has been installed in the library. And if the installation date of the image forming apparatus 101 is prior to reference date, the operation of the offline timer is not started even if the firmware is upgraded so that the automatic turn-off is reduced.

FIG. 6 is a flowchart illustrating an automatic turn-off process executed in the image forming apparatus according to the second embodiment. In the flowchart shown in FIG. 6, the steps S501 to S504 are sequentially executed as in the flowchart shown in FIG. 5. Then, as a result of the determination in the step S504, when it is determined that network is in the disconnected state, the process proceeds to a step S601.

In the step S601, the CPU 340 determines whether the offline timer is set to invalid. Note that the setting of the offline timer to invalid is performed on a screen (not shown) displayed on the operation unit 105, for example, and is stored in a storage device (a memory unit), such as the HDD 106, the nonvolatile memory 205, or the flash disk 207. The CPU 340 can change the invalid setting of the offline timer, that is, set to valid, in response to an operation by a user or an administrator or a notification from the computer 109 via the LAN 108.

Then, as a result of the determination in the step S601, when it is determined that the offline timer is set to invalid, the process ends, similarly to the case where it is determined that network is not in the disconnected state in the step S504. On the other hand, as a result of the determination in the step S601, when it is determined that the offline timer is not set to invalid, the process proceeds to a step S602.

In the step S602, the CPU 340 determines whether the installation date (date) on which the image forming apparatus 101 has been installed in the library (a predetermined location) is prior to a predetermined reference date. The installation date is stored in, for example, the storage device. Further, at least one of a production date on which the image forming apparatus 101 was produced and a setting date on which the operating conditions of the image forming apparatus 101 were set may be used instead of the installation date. Then, as a result of the determination in the step S602, when it is determined that the installation date is prior to the reference date, the process ends. As a result, the offline timer does not operate, and the automatic turn-off is disabled, and thus the execution of the automatic turn-off is prevented. On the other hand, as a result of the determination in the step S602, when it is determined that the installation date is not prior to the reference date, that is, the installation date is behind the reference date, the process sequentially executes the steps after the step S505. This starts the operation of the offline timer and enables the automatic turn-off, and thus the automatic turn-off can be executed. By such a control, when the unexpected execution of the automatic turn-off becomes a trouble, it is possible to prevent the unexpected execution of the automatic turn-off.

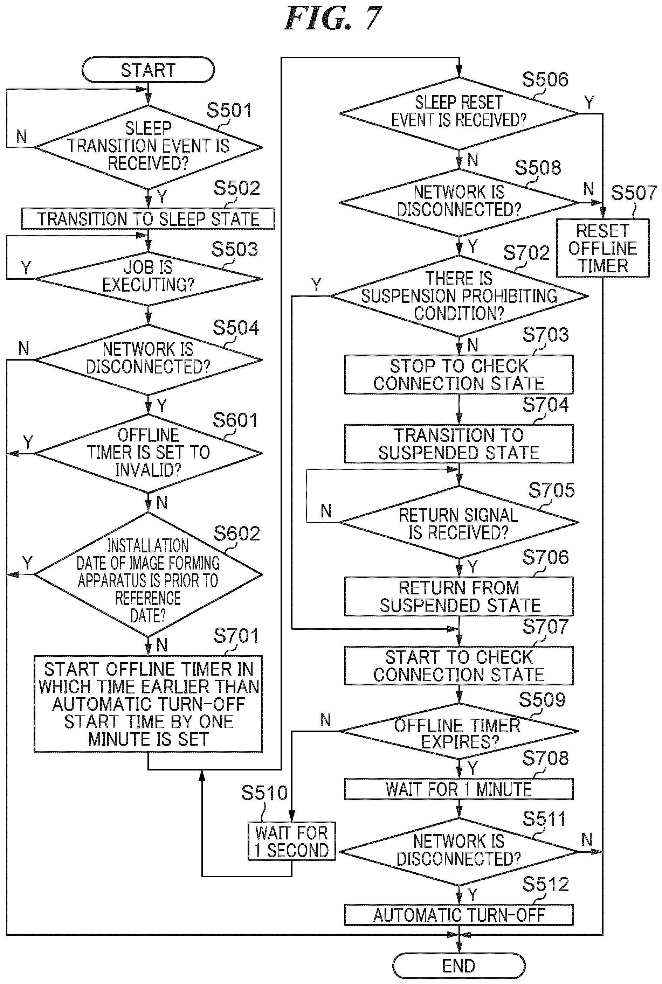

Hereinafter, a third embodiment will be described with reference to FIG. 7. Differences from the above-described embodiments will be described, and the description of the same matters will be omitted. In this embodiment, the image forming apparatus 101 can further take a third power state in addition to the first power state and the second power state. The power consumption in the third power state is lower than that in the second power state. The third power state is a deep sleep state, that is, the suspended state, in which the CPU 340 does not operate. The CPU 340 is configured to enable a switching control among the first power state, the second power state, and the third power state. Further, this embodiment can cope with a case where it is difficult to accurately determine that the network is in the disconnected state in the third power state.

When the image forming apparatus 101 transitions to the sleep state, the wireless LAN terminal 111 providing the wireless LAN, which is one of the networks, is deactivated. As a result, immediately after the return from the sleep state, it takes time to connect to the access point 112 through the wireless LAN terminal 111, and thus it may be determined that the network is in the disconnected state. Therefore, the image forming apparatus 101 is returned from the third power state (deep sleep state) at a predetermined time before the automatic turn-off so as to change a timing of the determination of whether the network is in the disconnected state. In addition, the CPU 340 stops its operation during the third power state. However, if the CPU 340 is returned at a predetermined interval to periodically determine whether the network is in the disconnected state, the power consumption increases. Therefore, the CPU 340 does not periodically determine whether the network is in the disconnected state during the third power state and restarts the periodic determination after returning from the third power state due to an event or the like.

FIG. 7 is a flowchart illustrating an automatic turn-off process executed in the image forming apparatus according to the third embodiment. In the flowchart shown in FIG. 7, the steps S501 to S504, S601, and S602 are sequentially executed as in the flowchart shown in FIG. 6. Then, as a result of the determination in the step S602, when it is determined that the installation date is not prior to the reference date, the process proceeds to a step S701.

In the step S701, the CPU 340 starts the operation of the offline timer in which a time earlier than the automatic turn-off start time by a certain time (for example, one minute) is set. After the execution of the step S701, the CPU 340 sequentially executes the step S506 and the step S508. Then, as a result of the determination in the step S508, when it is determined that the network is in the disconnected state, the process proceeds to a step S702. In this embodiment, the operation start time of the offline timer can be set to a desired certain time (predetermined time) before the auto-off start time by operating the operation unit (setting unit) 105, for example.

In the step S702, the CPU 340 determines whether there is a suspension prohibiting condition that prohibits the transition to the deep sleep state, which is the third power state. As a result of the determination in the step S702, when it is determined that there is the suspension prohibiting condition, the process proceeds to the step S509 and the subsequent steps are sequentially executed. On the other hand, as a result of the determination in the step S702, when it is determined that there is no suspension prohibiting condition, the process proceeds to step S703. The standby state in which the image forming apparatus can be quickly returned while saving power is not limited to the suspended state, and may be, for example, a hibernation state.

In the step S703, the CPU 340 stops the operation of the timer for checking the connection state of the network by polling until the offline timer expires. And then, the process proceeds to a step S704. There are two methods for checking the network connection state. The first method is a PULL method in which the device side that checks the connection state of the network notifies the CPU 340 by using a signal. The second method is a PUSH method of performing polling confirmation from the CPU 340 to the device side. In this embodiment, it is preferable to use the PUSH method that can prevent the CPU 340 from stopping.

In the step S704, the CPU 340 transitions to the suspended state. As a result, the image forming apparatus 101 enters into the suspended state. After the execution of the step S704, the process proceeds to a step S705.

In the step S705, the CPU 340 determines whether a return signal for returning from the suspended state is received while remaining in the suspended state. As a result of the determination in the step S705, when it is determined that the return signal is received, the process proceeds to a step S706. On the other hand, as a result of the determination in the step S705, when it is determined that no return signal is received, the process waits in the step S705.

The CPU 340 is returned from the suspended state in the step S706 and proceeds with the process to a step S707.

In the step S707, the CPU 340 starts the timer to check the connection state of the network by polling until the offline timer expires. And then, the process proceeds to the step S509. As a result of the determination in the step S509, when it is determined that the operation of the offline timer expires, the process proceeds to a step S708.

In the step S708, the CPU 340 waits for a designated time (for example, one minute) set earlier than the automatic turn-off start time before determining whether the network is in the disconnected state in the step S511. After the step S708 is executed, the process proceeds to the step S511, and the subsequent steps are sequentially executed.

As described above, in this embodiment, when it is determined that the image forming apparatus is in the disconnected state (Yes in the step S504), the transition to the third power state (deep sleep state) is completed before the offline timer expires (the step S704). When the offline timer expires (Yes in the step S509), the automatic turn-off can be executed (the step S512). By such a control, it is possible to check the connection state between the wireless LAN terminal 111 and the access point 112, which requires time for determining whether the network is in the disconnected state, during a period from the time earlier than the automatic turn-off start by the designated time to the automatic turn-off start time. Thus, in this embodiment, it is possible to cope with a case where it is difficult to accurately determine that the network is in the disconnected state in the third power state, and thus, it is possible to stably execute the automatic turn-off.

The time required for determining the disconnected state of the network can be shortened by the designated time and the network can be returned. Further, when it is difficult to guarantee the completion time of the automatic turn-off, the shutdown time required to transition from the automatic turn-off start to the automatic turn-off state or the transition time to the high-speed activation mode can be shortened by the designated time. For example, a case where the transition to the automatic turn-off state requires 10 minutes, the determination of the disconnected state of the network takes 1 minute, and the transition to the automatic turn-off state takes 1 minute and 30 seconds at the maximum will be described. In this case, the CPU 340 sets the offline timer to 7 minutes and 30 seconds.

As a result, the CPU 340 is returned after 7 minutes and 30 seconds and determines whether the network is in the disconnected state from 7 minutes and 30 seconds to 8 minutes. The CPU 340 then starts the automatic turn-off after 8 minutes and 30 seconds and shuts down from 8 minutes and 30 seconds to 10 minutes. Thus, the state can be changed to the automatic turn-off state within 10 minutes.

Although the preferred embodiments of the present disclosure have been described above, the present disclosure is not limited to the above-described embodiments, and various modifications and changes can be made within the scope of the gist of the present disclosure. The present disclosure can also be achieved by providing a program that achieves one or more functions of the above-described embodiments to a system or an apparatus via a network or a storage medium, and causing one or more processors of a computer of the system or the apparatus to read and execute the program. The present disclosure can also be implemented by a circuit (for example, an ASIC) that implements one or more functions.

According to the present disclosure, the power consumption in the information processing apparatus is reduced in accordance with the use state of the information processing apparatus.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the disclosure is not limited to the disclosed embodiments, but is defined by the scope of the following claims.

## Claims

1. An information processing apparatus (101) that is connectable to a network and can take a first power state in which electric power is supplied and a second power state in which power consumption is lower than that in the first power state, the information processing apparatus comprising:
a power control unit (340) configured to enable a switching control between the first power state and the second power state; and
a determination unit (340) configured to determine whether a current state is a connected state in which the network is connected or a disconnected state in which the network is disconnected,
wherein the determination unit is configured to determine whether the current state is the connected state or the disconnected state during switching from the first power state to the second power state by the power control unit or after completion of switching from the first power state to the second power state, and
wherein the power control unit is configured to start a timer in a case where the determination unit determines that the current state is the disconnected state, and enables a shutoff control to forcibly shut off power supply of the information processing apparatus in a case where the timer expires.

2. The information processing apparatus according to claim 1, wherein an execution instruction instructing the information processing apparatus to execute a predetermined process is acceptable, and
wherein the determination unit is configured to determine whether the current state is the connected state or the disconnected state during switching to the second power state or after completion of switching to the second power state and completion of execution of the predetermined process in accordance with the execution instruction.

3. The information processing apparatus according to claim 1 or 2, wherein the determination unit is configured to determine again whether the current state is the connected state or the disconnected state when the timer expires, and
wherein the power control unit is configured to enable the shutoff control in a case where it is determined that the current state is the disconnected state as a result of redetermination by the determination unit.

4. The information processing apparatus according to any one of claims 1 to 3, wherein the information processing apparatus is connectable to each of a wired LAN (108), a wireless LAN, a USB device (109, 209), and a FAX device (107),
wherein the determination unit is configured to determine that the current state is the connected state in a case where the information processing apparatus is communicably connected to at least one of the wired LAN, the wireless LAN, the USB device, and the FAX device, and determine that the current state is the disconnected state in a case where the information processing apparatus is not communicably connected to any of the wired LAN, the wireless LAN, the USB device, and the FAX device.

5. The information processing apparatus according to any one of claims 1 to 4, wherein the power control unit is configured to start the timer, and control the operation of the timer to cancel, stop, or return to an initial state in a case where the switching from the second power state to the first power state by the power control unit is completed before the timer expires.

6. The information processing apparatus according to any one of claims 1 to 5, wherein the power control unit is configured to start the timer, and control the operation of the timer to cancel, stop, or return to an initial state in a case where the determination unit determines that the current state is the connected state before the timer expires.

7. The information processing apparatus according to any one of claims 1 to 6, further comprising:
a memory unit (106, 205, or 207) configured to store at least one of an installation date on which the information processing apparatus is installed at a predetermined place, a production date on which the information processing apparatus is produced, and a setting date on which an operation condition of the information processing apparatus is set;
a switching control unit (420, 430) configured to perform a switching control for switching the shutoff control between valid and invalid on the power control unit,
wherein the switching control unit is configured to validate the shutoff control in a case where the date is a predetermined reference date or later and invalidate the shutoff control in a case where the date is earlier than the reference date.

8. An information processing apparatus (101) that is connectable to a network and can take a first power state in which electric power is supplied, a second power state in which power consumption is lower than that in the first power state, and a third power state in which power consumption is lower than that in the second power state, the information processing apparatus comprising:
a power control unit (340) configured to enable a switching control among the first power state, the second power state, and the third power state; and
a determination unit (340) configured to determine whether the network is in a connected state in which the network is connected or in a disconnected state in which the network is disconnected,
wherein the determination unit is configured to determine whether the current state is the connected state or the disconnected state during switching from the first power state to the second power state by the power control unit or after completion of switching from the first power state to the second power state, and
wherein the power control unit is configured to start a timer in a case where the determination unit determines that the current state is the disconnected state, and enable a shutoff control to forcibly shut off power supply of the information processing apparatus in a case where the timer expires after the switching from the second power state to the third power state is completed.

9. The information processing apparatus according to claim 8, further comprising a setting unit (105) configured to set an operation start time of the timer to a time earlier than a time at which the shutoff control is performed by a predetermined time.

10. The information processing apparatus according to any one of claims 1 to 9, wherein the power control unit is configured not to perform the shutoff control in a case where the determination unit determines that the current state is the connected state.

11. The information processing apparatus according to any one of claims 1 to 10, further comprising an operation unit (105) configured to accept an operation of selecting valid or invalid of the shutoff control.

12. The information processing apparatus according to any one of claims 1 to 11, wherein the information processing apparatus is an image forming apparatus (101).

13. A control method for an information processing apparatus (101) that is connectable to a network and can take a first power state in which electric power is supplied and a second power state in which power consumption is lower than that in the first power state, the control method comprising:
determining (S504) whether a current state is a connected state in which the network is connected or a disconnected state in which the network is disconnected during switching from the first power state to the second power state or after completion of the switching from the first power state to the second power state;
starting (S505) a timer in a case where it is determined that the current state is the disconnected state; and
enabling (S512) a shutoff control to forcibly shut off power supply of the information processing apparatus in a case where the timer expires.

14. A control method for an information processing apparatus (101) that is connectable to a network and can take a first power state in which electric power is supplied, a second power state in which power consumption is lower than that in the first power state, and a third power state in which power consumption is lower than that in the second power state, the control method comprising:
determining (S504) whether a current state is a connected state in which the network is connected or a disconnected state in which the network is disconnected during switching from the first power state to the second power state or after completion of the switching from the first power state to the second power state;
starting (S701) a timer in a case where it is determined that the current state is the disconnected state; and
switching (S706) from the third power state to the second power state and enabling (S512) a shutoff control to forcibly shut off power supply of the information processing apparatus in a case where the timer expires after the switching from the second power state to the third power state is completed.

15. A computer program comprising instructions which, when the program is executed by a computer, cause the computer to carry out the method of claim 13 or 14.

16. A non-transitory computer-readable storage medium storing the computer program according to claim 15.
